# EUROPÄISCHE PATENTSCHRIFT

(11) **EP 0 567 893 B1**
(45) Veröffentlichungstag und Bekanntmachung des Hinweises auf die Patenterteilung: **02.07.1997**
(21) Anmeldenummer: 93106346.5
(22) Anmeldetag: 20.04.1993
(51) Int. Cl.: G01N 35/04, B65G 47/14

(54) **Vorrichtung zur Vereinzelung von Küvetten in einem automatischen Analysengerät**
Apparatus for supplying cuvettes separately to an automatic analyser
Dispositif pour distribuer individuellement des cuvettes à un appareil d'analyse automatique

(30) Priorität: 30.04.1992 CH 1391/92
(43) Veröffentlichungstag der Anmeldung: 03.11.1993
(73) Patentinhaber: F. HOFFMANN-LA ROCHE AG, 4002 Basel (CH)
(72) Erfinder: Rosenberg, Burkard, CH-6048 Horw (CH); Schacher, Gottlieb, CH-6030 Ebikon (CH)
(74) Vertreter: Ventocilla, Abraham

(56) Entgegenhaltungen:
- DE-B- 2 532 763
- US-A- 2 025 273
- US-A- 4 306 649

## Beschreibung

Die Erfindung betrifft eine Vorrichtung zur Vereinzelung von Küvetten, die einem Analysengerät in Form von Schüttgut zugeführt werden, wobei die Küvetten zur Durchführung photometrischer Messungen der in den Küvetten enthaltenen Proben geeignet sind, und wobei jede Küvette einen rohrförmigen Körper mit einem Flanschansatz hat, der sich nach aussen erstreckt, und der senkrecht zu der Küvettenwand gerichtet ist. Die Erfindung betrifft eine Vorrichtung dieser Art, welche folgende Komponenten enthält:
a) eine Aufnahmestelle zur Aufnahme der Küvetten in Form von Schüttgut,
b) eine Einrichtung zur Vereinzelung von Küvetten, welche Einrichtung einen Eingang hat, durch den ungeordnete Küvetten der Einrichtung zugeführt werden, und einen Ausgang hat, durch den einzelne Küvetten hintereinander die Einrichtung verlassen, und
c) Mittel zum Transport ungeordneter Küvetten von der Aufnahmestelle zum Eingang der Einrichtung zur Vereinzelung der Küvetten.

Eine derartige Vorrichtung ist aus DE-B-2532763 bekannt.

Automatische Analysenvorrichtungen arbeiten in der Regel nach dem Prinzip, dass die Analysenproben oder Teilmengen davon in Messküvetten verbracht, anschliessend einer Reihe von Bearbeitungsschritten wie Zufügen (Pipettieren) von Reagenzien, Mischen, Inkubieren etc. unterworfen und dass entweder mehrmals während der Bearbeitung und/oder einmal am Ende der Bearbeitung photometrische Messungen der erfolgten Reaktionen vorgenommen werden. Dabei erfolgt der Ablauf üblicherweise entweder so, dass die Messküvetten mit den Analysenproben in fester Reihenfolge auf einem Transportmittel angeordnet werden und verschiedene Bearbeitungsstationen durchlaufen oder dass bei der sog. Batch-Bearbeitung, wie sie bei den sog. Zentrifugalanalysengeräten üblich ist, alle auf einem Träger (Rotor) angeordneten Messküvetten quasi gleichzeitig den Bearbeitungsschritten und den photometrische Messungen unterworfen werden. Nach diesen Prinzipien arbeitende Analysensysteme leisten gute Dienste in grossen Kliniken und Analysenzentren, in denen grosse Probenzahlen verarbeitet werden müssen.

Es hat sich aber angesichts der heutigen Vielfalt der möglichen Analysen und der medizinischen Anforderungen, vor allem im Bereich der klinischen Chemie herausgestellt, dass die bisher üblichen für den Durchsatz grosser Probenmengen geeigneten Analysenautomaten zu wenig flexibel sind, um auf einzelne Patienten bzw. Krankheitsbilder spezifisch zugeschnittene Analysenprofile (Full Random Access) zu erstellen und trotzdem eine grosse Zahl von Patientenproben zu bewältigen.

Um die gewünschte hohe Flexibilität zu erreichen, muss im Analysensystem einen zuverlässigen Transport und Bearbeitung einzelner Messküvetten möglich sein.

Da die Zahl der zu bearbeitenden Messküvetten sehr gross ist, ist es bei solchen Analysengeräten erwünscht, das Gerät mit leeren Küvetten in Form von Schüttgut beladen zu können, die dann im Gerät automatisch vereinzelt und für deren Benutzung zur Durchführung des oben erwähnten Analyseverfahrens von einer geeigneten Transporteinrichtung transportiert werden. Eine Vorrichtung die eine solche automatische Vereinzelung von Küvetten durchführen kann, ist bei bisher bekannten Analysengeräten nicht vorhanden.
Der Erfindung liegt daher die Aufgabe zugrunde, eine derartige Vorrichtung bereitzustellen.

Erfindungsgemäss wird diese Aufgabe mit einer Vorrichtung der eingangs genannten Art gelöst, welche dadurch gekennzeichnet ist, dass sie zur vereinzelung von Küvetten geignet ist, welche aus einem Lichtdurchlässigem kunstoff, in einem Stück geformten Teil bestehen zwei planparalellen Wände besitzen, und wobei die Flanschansätze beider planparallelen Wände in bezug auf die Längsachse der Küvette zueinander symmetrisch sind, und wobei sie ferner folgende Komponenten enthält:
d) eine feste Platte, die auf einer Grundplatte montiert und in bezug auf eine senkrechte Gerade geneigt angeordnet ist,
e) ein Lagerrohr, das auf der festen Platte montiert und senkrecht dazu gerichtet ist,
f) eine drehbare Scheibe, die auf dem Lagerrohr drehbar gelagert ist und parallel zur festen Platte angeordnet ist,
g) eine auf der drehbaren Scheibe befestigte, zylindrische Anordnung von gleich grossen, zylindrischen Stäben, die voneinander gleichmässig beabstandet entlang eines Kreises angeordnet sind,der mit dem Lagerrohr konzentrisch ist, wobei die Stäbe parallel zum Lagerrohr gerichtet und wie er in bezug auf eine horizontale Gerade um einen Winkel geneigt sind, und wobei ein Ende jedes der Stäbe mit der drehbaren Scheibe fest verbunden ist, während das andere Ende des Stabes frei ist und durch einen Spalt von der Festplatte beabstandet ist, und wobei der Abstand zwischen benachbarten Stäben gerade so gross ist, dass der Körper einer Küvette zwischen den Stäben einfahren kann, wenn die planparallelen Wände der Küvette sich parallel zur Längsachse der Stäbe befinden,
h) motorgetriebene Mittel zur Drehung der drehbaren Scheibe mit konstanter Geschwindigkeit,
i) eine feste, ringförmige Scheibe, die auf der festen Platte montiert ist, in deren Mitte einen Durchgang für das Lagerrohr aufweist, und deren Umfangsrand sich innerhalb der zylindrischen Anordnung von Stäben befindet, wobei der Abstand zwischen dem Rand der festen, ringförmigen Scheibe und den Stäben knapp etwas grösser als die Dicke der Flanschansätze der Küvetten ist, und
j) eine erste in der festen Platte vorhandene Oeffnung, die sich oberhalb des unteren Rands der festen ringförmigen Scheibe befindet und die als Eingang zur Einführung ungeordneter Küvetten in die käfigartige Struktur dient, die durch die feste Platte, die Anordnung von Stäben und die drehbare Scheibe gebildet ist.

Die wesentlichen Vorteile der erfindungsgemässen Vorrichtung sind wie folgt:
Bei der Vereinzelung der Küvette wird ein Zerkratzen der Küvettenwände und ein Verklemmen der Küvetten vermieden. Die vereinzelten Küvetten werden in einer vorbestimmten Lage abgegeben, die für ihren weiteren Transport im Analysengerät geeignet ist, und sie werden mit der erforderlichen Geschwindigkeit der Transporteinrichtung des Analysenautomats zur Verfügung gestellt.

Ein Ausführungsbeispiel der Erfindung wird im folgenden anhand der beiliegenden Zeichnungen beschrieben. Es zeigen:
- Fig. 1: eine erfindungsgemässe Vorrichtung in axonometrische Gesamtdarstellung,
- Fig. 2: einen Längsschnitt gemäss der Linie II-II in Fig. 1,
- Fig. 3: einen Querschnitt gemäss der Linie III-III in Fig. 2,
- Fig. 4: eine Aufsicht (IV) auf zwei Stäbe einer Rotortrommel gemäss Fig. 3 mit angedeuteter Küvette,
- Fig. 5: einen Schnitt gemäss der Linie V-V in Fig. 3,
- Fig. 6: ein vergrösserter Ausschnitt (VI) aus Fig. 5
- Fig. 7: eine andere Ausführungsform der erfindungsgemässen Vorrichtung in axonometrischer Darstellung,
- Fig. 8: einen Längsschnitt gemäss der Linie VIII-VIII in Fig. 7,
- Fig. 9: einen Schnitt gemäss der Linie IX-IX in Fig. 8,
- Fig. 10: einen Schnitt gemäss der Linie X-X in Fig. 9,
- Fig. 11 bis 13: Teilansichten gemäss den Pfeilen XI bis XIII in Fig. 9.

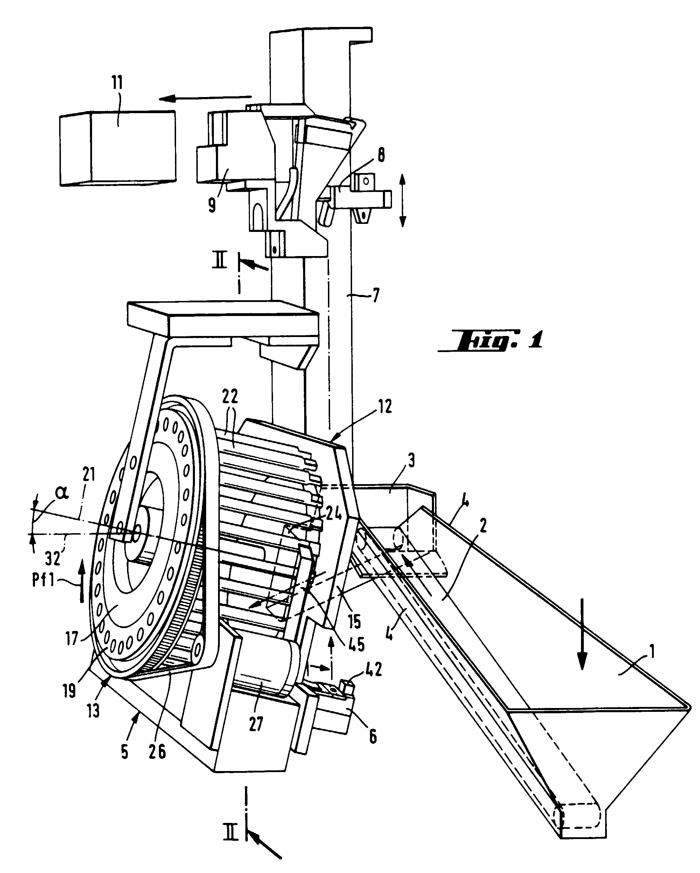

In Fig. 1 erkennt man einen Küvettenbunker 1, welcher ungeordnete Küvetten in Form einer losen Schüttung von z.B. 3000 Küvetten aufnehmen kann. Als Transportorgan zum dosierten Ueberführen der ungeordneten Küvetten aus dem Küvettenbunker 1 in einen Zuführungstrichter 3 einer Einrichtung 5 zur Vereinzelung von Küvetten dient ein schräg ansteigender Förderband 2, welches am Grund einer durch Seitenwände 4 gebildeten Rinne angeordnet ist und kontinuierlich oder diskontinuierlich, je nach erforderlichen Küvettenvolumen, antreibbar ist.

Die Einrichtung 5 zur Vereinzelung von Küvetten ist vorzugsweise eine Ausricht- und Separiereinrichtung, in der die aleatorisch zugeführten, ungeordneten Küvetten in eine einzig mögliche Lage überführt werden und die ausgerichtete Küvetten von den ungeordneten Küvetten separiert werden . Die lagegerecht orientierten Küvetten werden bei Bedarf aus der Ausricht- und Separiereinrichtung 5 ausgeschleust und in ein Küvettenlager 6 verbracht.

Aus dem Küvettenlager 6 kann jeweils eine einzelne Küvette z.B. mittels eines Greifers 8 eines Küvettenlifts 7, über eine Uebergabeeinrichtung 9 in eine Arbeitsebene einer hier nur schematisch als Block angedeutete Arbeitsstation 11 gebracht werden. Wenn die Arbeitsebene sich annähernd in der Zugriffsebene der Küvette 25 am Ausgang des Küvettenlagers 6 befindet, ist ein Küvettenlift nicht erforderlich. In diesem Fall genügt es ein passender Greifer zum Transport der Küvette zur Arbeitsstation vorzusehen.

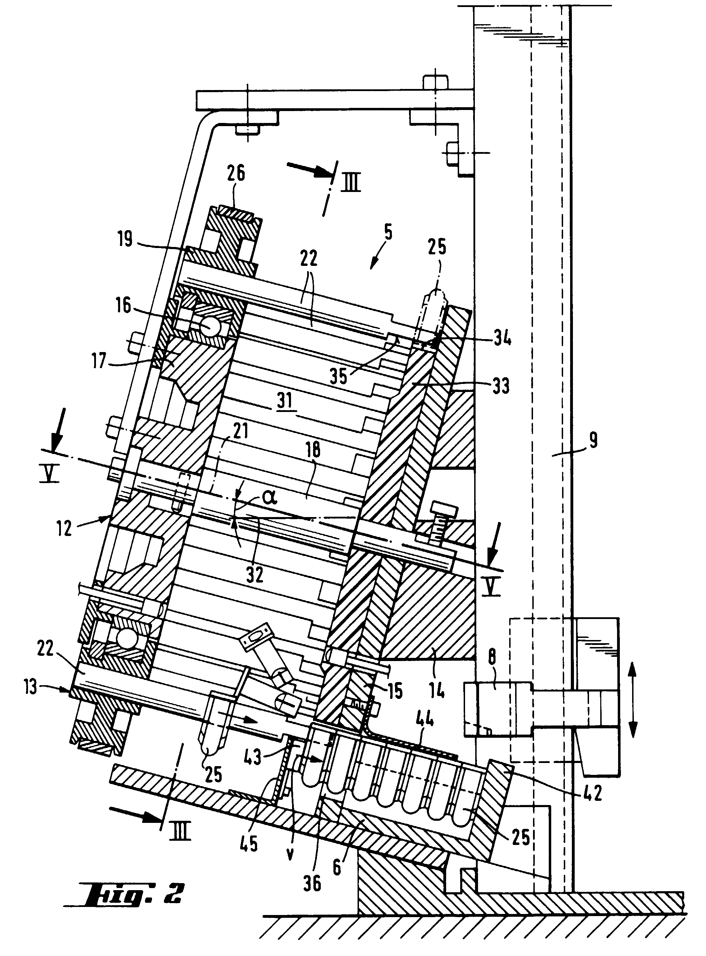

In Fig. 2 bis 6 ist eine Ausricht- und Separiereinrichtung 5 in funktionserläuternden Weise dargestellt, wobei für das Verständnis nicht relevante Konstruktionselemente der Uebersichtlichkeit halber nicht dargestellt sind.

Die Ausricht- und Separiereinrichtung 5 besteht im wesentlichen aus einem Stator 12 und einem Rotor 13. Der Stator 12 weist einen Lagerbock 14 mit darauf angeordneter Statorplatte 15 auf, die gegenüber einer vertikalen Gerade um einen Winkel α geneigt ist. Die Statorplatte 15 bildet dem stirnseitigen Abschluss des Rotors 13. Der Rotor 13 ist über ein Kugellager 16 auf einer Lagerscheibe 17 drehbar gehaltert, welche über einen zentral angeordneten Lagerrohr 18, beabstandet zur Statorplatte 15, mit dem Lagerblock 14 starr verbunden ist. Das Lagerrohr 18 ist senkrecht zur Statorplatte 15 und zur Lagerscheibe 17 angeordnet. Die Lagerscheibe ist daher parallel zur Statorplatte 15 angeordnet. Die Lagerscheibe 17 bildet zusammen mit einer drehbaren Scheibe 19 den der Statorplatte 15 gegenüberliegenden, stirnseitigen Abschluss des Rotor 13. Der zylindrische Aussenmantel des Rotors 13 wird durch senkrecht von der Scheibe 19 , parallel zur Rotordrehachse 21 in Richtung Statorplatte 15 abragende Stäbe 22 mit einer vorzugsweise runden Querschnittsform, gebildet, wobei der Stabdurchmesser sowie die Winkelabstände der Stäbe 22 auf ihren gemeinsamen Teilkreis derart aufeinander abgestimmt sind, dass Zwischenräume 23 in definierter Breite b (Fig. 4) resultieren, welche parallel zur Drehachse 21 ausgerichtet sind.

Ein Ende jedes der Stäbe 22 ist mit der Scheibe 19 fest verbunden. Das andere Ende jedes der Stäbe 22 ist frei und ist durch einen Spalt von der Statorplatte 15 beabstandet.

Die Stäbe 22 sind parallel zum Lagerrohr 18 gerichtet und wie er um einen Winkel α in bezug auf eine horizontalen Gerade 32 geneigt.

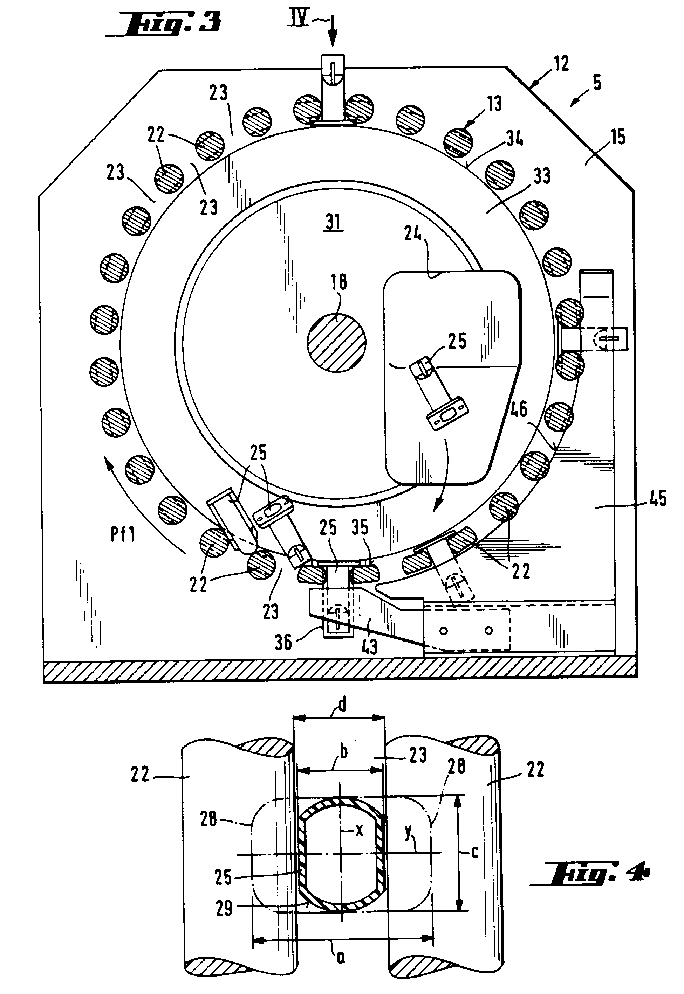

Ueber eine Zufuhröffnung 24 in der Statorplatte 15, welche mit einem Einlauftrichter 3 verbunden ist, können Küvetten 25 in schüttender Weise in das innere des käfigartigen Rotors 13 verbracht werden (Fig. 1, 3).

Der Rotor 13 ist mittels eine peripher an der Scheibe 19 angreifenden Riemen 26 mit dem Antriebsmotor 27 verbunden (Fig. 1). Beim Betrieb erfolgt der Drehantrieb des Rotors kontinuierlich und mit konstanter Drehgeschwindigkeit. Die Drehgeschwindigkeit des Rotors liegt vorzugsweise zwischen 8 und 15 Umdrehungen pro Minute. Bevorzugt ist eine Drehgeschwindigkeit von ca. 11 Umdrehungen pro Minute.

Die Notwendigkeit des Ausrichtens der hier verwendeten Küvetten 25 liegt in der Asymmetrie bezüglich der x und y Achse (Fig. 4) begründet.

Erfindungsgemäss wird diese Asymmetrie in vorteilhafter Weise zur Ausrichtung der Küvetten 25 genützt.

Eine derartige Küvette 25 weist im öffnungsseitigen Randbereich zwei diametral gegenüberliegende, den Transport der Küvette 25 erleichternde, Flanschansätze 28 auf, deren Spannweite a in y-Richtung die Abmessung b des Küvettentubus 29 in y-Richtüng übersteigt. Die Abmessung c des Küvettentubus 29 in x-Richtung ist gleich mit der Abmessung der Flanschansätze 28 in x-Richtung. Die Abmessung b des Küvettentubus 29 ist kleiner als c. Der lichte Abstand d zwischen zwei benachbarten Stäben 22 ist geringfügig grösser als das Mass b, aber deutlich kleiner als das Mass c.

Daraus folgt, dass der Küvettentubus 29 nur mit seiner x-Achse parallel zur Rotordrehachse 21 zwischen zwei Stäbe 22 gelangen kann. Die Flanschansätze 28 stützen sich oberseitig auf den Stäben 22 ab, wodurch ein Durchfallen der Küvetten 25, aus dem käfigartigen Rotorinnenraum 31 heraus, verhindert wird.

In Fig. 3 erkennt man, dass die Zufuhröffnung 24 in der Statorplatte 15 derart gegenüber der Drehachse 21 des Rotors 13 versetzt ist, dass die in das Rotorinnere 31 zu verbringenden Küvetten 25, in Anbetracht der Rotationsbewegung (Pfeil Pf1) und der daraus resultierenden vertikalen Lagerveränderung der Stäbe 22, in den zunächst abfallenden Bereich gelangen. Durch Drehung der Rotortrommel 13 (Pf 1) gelangen die Küvetten 25 in den tiefsten Bereich der Rotortrommel 13, wobei einige Küvetten 25 unter Schwerkraftwirkung mit ihren Tubus lagerichtig zwischen die Stäbe 22 einfahren können. Die noch nicht ausgerichteten Küvetten 25 werden alsdann in den aufsteigenden Bereich der Rotortrommel 13 mitgenommen, was zur schwerkraftbedingten Umwälzung und letztendlich zur Ausrichtung der Küvette 25 führt (Fig. 3).

Die Rotordrehachse 21 ist gegenüber der Horizontalen 32 um einen Winkel α derart geneigt, dass ausgerichtete Küvetten 25 unter Wirkung der Schwerkraft in Richtung Statorplatte 15 gleiten können bis die Küvetten 25 an der Statorplatte 15 zur Anlage kommen (Fig. 2). Der Neigungswinkel α liegt vorzugsweise zwischen 10 und 20 Grad. Bevorzugt ist ein Winkel von 15 Grad.

Befinden sich die ausgerichteten Küvetten 25 in Anlage an der Statorplatte 15 werden diese mündungsseitig bzw. flanschseitig durch den äusseren Umfangsrand 34 einer auf die Statorplatte 15 aufgebrachte Führungsscheibe 33 übergriffen (Fig. 2, 3). Die Führungsscheibe 33 hat in der Mitte einen Durchgang für das Lagerrohr 18 und ausserdem eine in den Zeichnungen nicht dargestellte Oeffnung, die mit der Zufuhröffnung 24 der Statorplatte 15 zusammenfällt. Die Führungsscheibe 33 ist vorzugsweise aus Polyoxymethylen (POM). Wie aus Fig. 3 ersichtlich, ist der Abstand zwischen dem Rand der Führungsscheibe 33 und die Stäbe 22 knapp etwas grösser als die Dicke der Flanschansätze der Küvetten.

Bei weiterer Drehung des Rotors 13 gelangen die Ausgerichteten Küvetten 25 in den oberen Bereich. Der äussere Umfangsrand 34 vermag die ausgerichteten, im oberen Bereich gehaltenen Küvetten 25 entgegen der Schwerkraft abzustützen, sodass diese Küvetten 25 in ihrer Lage zwischen den Stäben 22 verbleiben. Die axiale Erstreckung des Umfangsrandes 34 ist derart gewählt, dass nur eine Küvette 25 geführt bzw. gestützt wird. Sind nun beispielsweise zwei Küvetten 25 hintereinander ausgerichtet in einen Zwischenraum 23 zwischen zwei Stäben 22 vorhanden, wird nur die statorplattennahe Küvette 25 in ihrer Lage gehalten. Die zweite Küvette 25 fällt durch Schwerkraftwirkung unter Verlust der Ausrichtung in den unteren Bereich des Rotors 13 zurück.

Abflachungen 35 an den statorplattenseitigen Enden der Stäbe 22 können die Auflage der Küvettenflansche 28 verbessern.

Um eine möglichst schonende Behandlung der Küvetten während des oben beschriebenen Vereinzelungsverfahrens zu erreichen, sollte der Rotor eine möglichst geringe Masse haben. Um dies zu erreichen, sind die Stäbe 22 vorzugsweise aus einem leichten Metall, z.B. aus Aluminium. Um eine gute Gleitfähigkeit der Küvetten auf den Stäben 22 zu erreichen, werden diese vorzugsweise mit einer geeigneten Beschichtung versehen. Hierfür werden Aluminium-Stäbe 22 z.B. mit einer Nickel-Teflon-Beschichtung versehen (z.B. 30% Nickel und 70% Teflon).

Die ausgerichteten Küvetten 25, welche sich mit ihren Flanschen 28 zwischen den Abflachungen 35 der Stäbe 22 und dem Umfangsrand 34 befinden können das Rotorinnere 31 nur noch über eine eigens dafür vorgesehen Oeffnung 36 verlassen und sind als separiert zu betrachten. Diese separierten Küvetten 25 laufen gemäss der Rotordrehung Pf1 um und stellen einen Küvettenvorrat dar, aus welchem nach Bedarf einzelne Küvetten entnommen werden können.

Einzelne separierte Küvetten 25 des soeben erwähnten Küvettenvorrats können durch ein Fenster 36, welches in der Statorplatte 15 entsprechend der Form der Küvetten 25 eingebracht ist, den Rotorinnenraum 31 verlassen. Der Ausschleusvorschub wird z.B. durch eine Blattfeder 43 bewerkstelligt, welche Küvetten 25 durch das Fenster 36 zu befördern vermag (Fig. 2, 3, 5, 6).

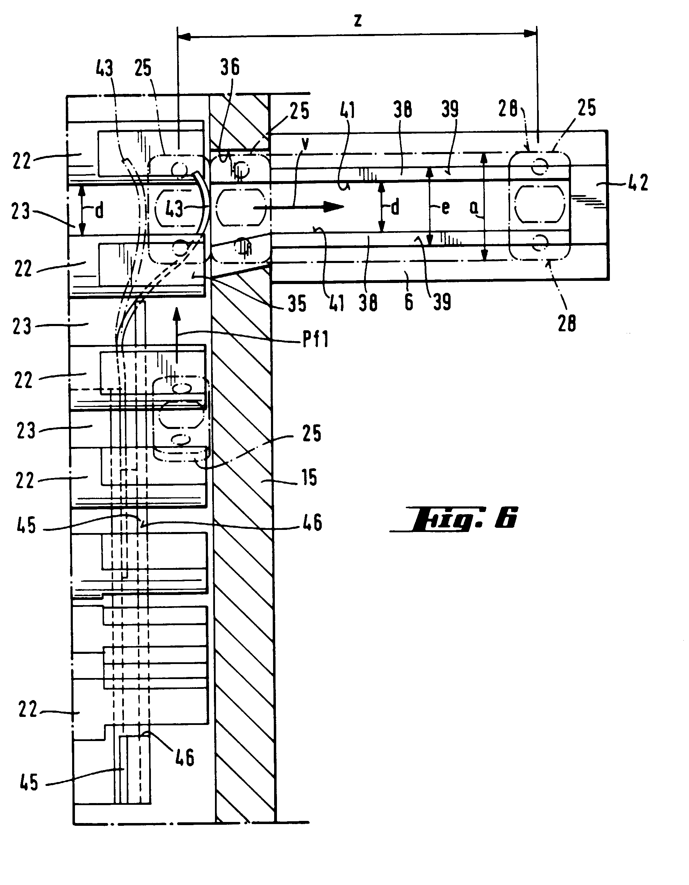

In Verlängerung der Fensteröffnung 36 ist ein Küvettenlager 6 angeordnet. Die Führung der Küvetten 25 wird durch schmale vertikale Leisten 38 gebildet, auf deren oberen Fläche 39 die Küvettenflansche 28 mit ihrer Unterseite gleitend aufliegen. Der Küvettentubus wird durch die Innenflächen 41 (Abstand d) der Leisten 38 geführt. An dem dem Fenster 36 gegenüberliegendem Ende der Leisten 38 ist ein Anschlag 42 vorgesehen, an welchen sich jeweils eine Küvette 25, positionsgerecht in einer Zugriffsebene eines Greifers 8, beispielsweise eines Küvettenlifts 7, in Anlage gelangt (Fig. 6). Die Position der Küvette 25 in der Zugriffsebene ist konstruktionsbedingt von der separierten Küvette 25 im Küvettenvorrat (innerhalb des Rotors) beabstandet (Abstand z in Fig. 6). Durch die geringere Breite e der Leisten 38 gegenüber der Flanschspannweite a kann das Greiforgan 8 beispielsweise die Flanschenden ergreifen.

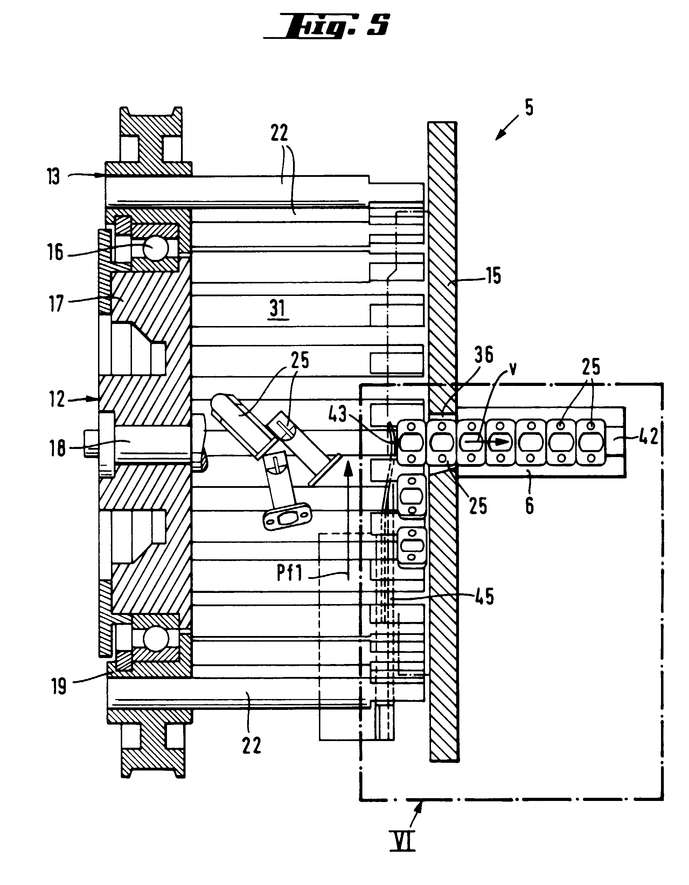

Nach einer Entnahme einer Küvette 25 aus dem Küvettenlager 6 kann durch die Blattfeder 43, welche auf eine separierte Küvette 25 des Küvettenvorrats im Rotorinnenraum, welche Küvette mit dem Fenster 36 fluchtet, und auf eine bereits im Küvettenlager 6 befindlichen, den Abstand z überbrückende Küvettenreihe wirkt (Kraft v in Figuren 5 und 6), die nächste Küvette in der Zugriffsebene des Greifers positioniert werden (Fig. 2, 5, 6).

Die den Abstand z überbrückenden Küvetten 25 im Küvettenlager 6 werden oberseitig durch eine Blattfeder 44 gesichert , welche an der Statorplatte 15 befestigt ist (Fig. 2).

Um etwaige Verklemmungen von Küvetten 25 im Bereich der Blattfeder 43 zu vermeiden, ist eine die separierten Küvetten 25 im Küvettenvorrat von den ungeordneten, d.h. noch nicht ausgerichteten Küvetten innerhalb der Trommel (31) bzw. des Rotors 13 abgrenzende Trennwand 45 vorgesehen, welche sich im Bereich der Zufuhröffnung 24 der Statorplatte 15 in einem Winkelbereich von ca. 90° erstreckt (Fig. 3).

Die Trennwand 45 ist am Statorboden fixiert und weist eine an den Rotoraussendurchmesser angepasste Kontur 46 auf.

Die Trennwand 45 vermag auf etwaige, durch die Zwischenräume 23 der Stäbe 22 durchgreifende Küvetten 25 von der Blattfederzone fernzuhalten. Die Blattfeder 43 ist an der Trennwand 45 befestigt.

Der Drehantrieb des Rotors erfolgt kontinuierlich, unberücksichtigt dessen, welche Küvettenmenge gebraucht wird. Gebraucht wird z.B. eine Küvette jede 6 Sekunden.

Es muss nur darauf geachtet werden, dass der Füllungsgrad des Rotors mit ungeordneten Küvetten möglichst konstant gehalten wird, was durch Regelung der Zufuhr aus dem Küvettenbunker möglich ist. Entsprechende, beispielsweise optische Ueberwachungseinrichtungen zur Regelung der Küvettenzufuhr zum Rotor sind dem Fachmann bekannt.

In der oben beschriebenen Ausführungsform verlassen die einzelnen Küvetten 25 den Rotorinnenraum 31 der Ausricht- und Separiereinrichtung 5 durch einen Ausgang 36, der am unteren Teil einer Führungsscheibe 33 liegt. Die an diesem Ausgang 36 abgegebenen Küvetten 25 werden von Transportmitteln weiter transportiert, die folgende Komponenten enthalten: ein Küvettenlager 6, einen Greifer 8, und eine Uebergabeeinrichtung 9.

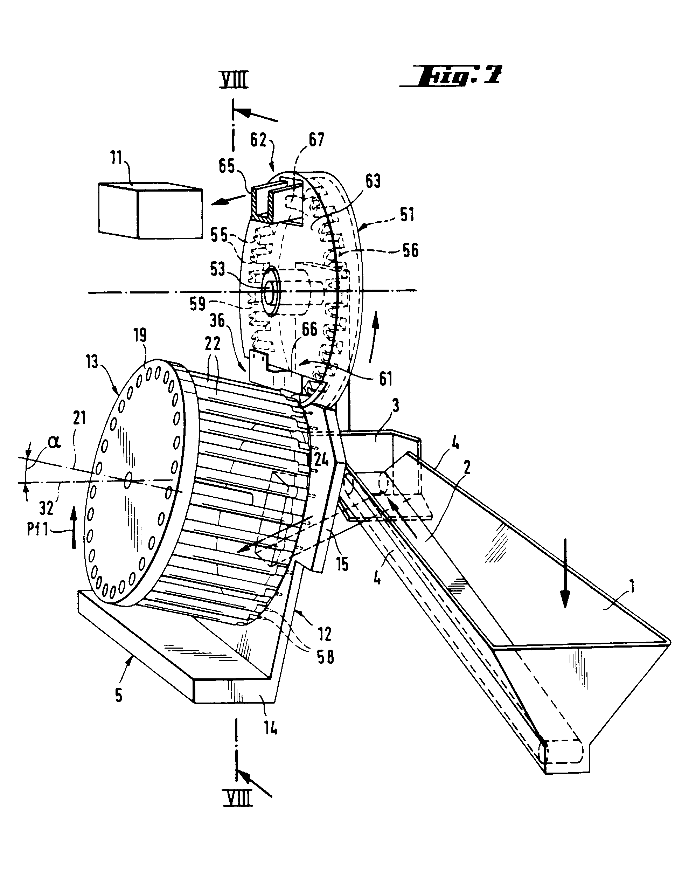

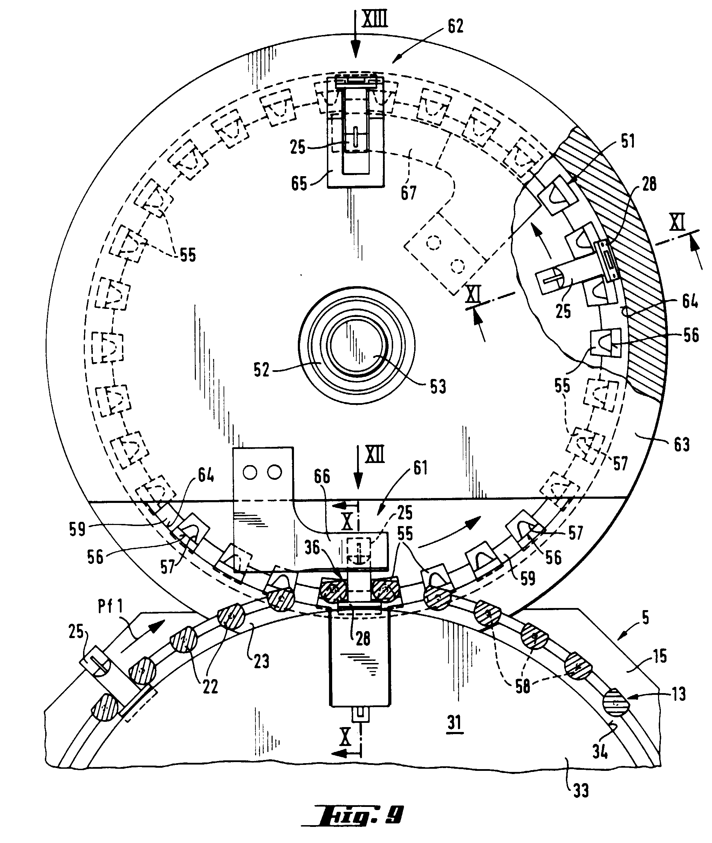

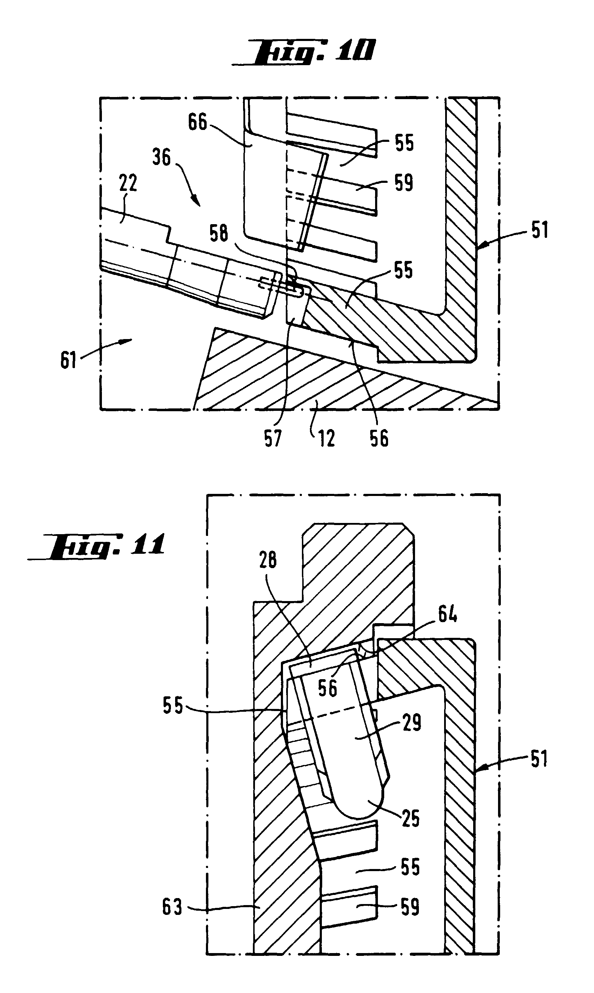

Eine bevorzugte Variante der erfindungsgemässen Vorrichtung wird nachstehend anhand der Figuren 7 bis 13 beschrieben. In dieser Variante sind die oben erwähnten Transportmittel durch ein Schwenkrad 51 ersetzt und der Ausgang 36 der Ausricht- und Separiereinrichtung 5 befindet sich nicht am unteren, sondern am oberen Teil der Führungsscheibe 33.

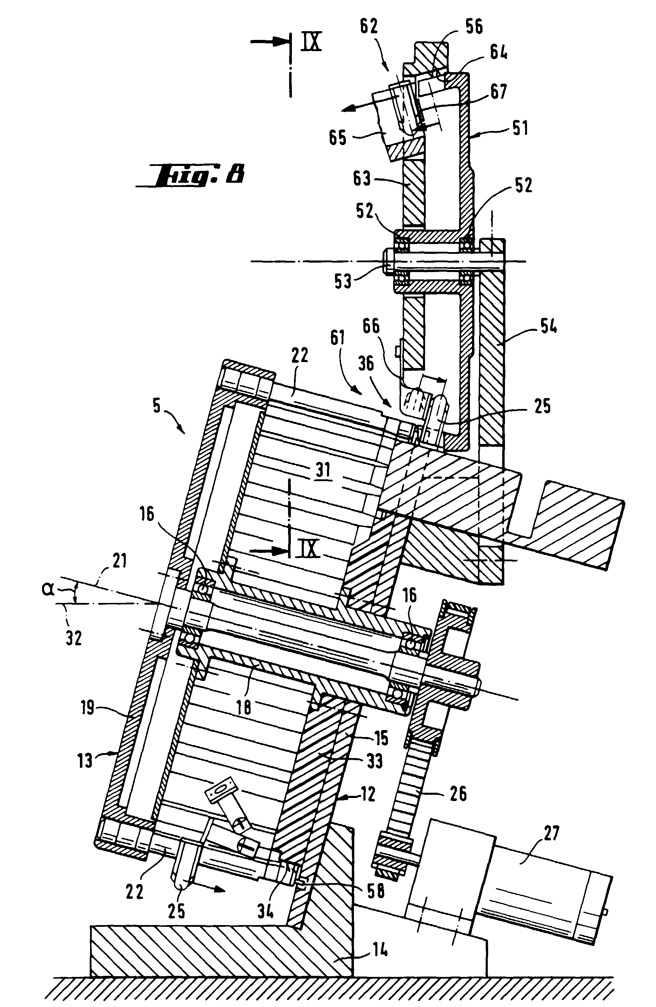

Das Schwenkrad 51 ist mittels Kugellager 52 auf einem Zapfen 53 drehbar gelagert, welcher über einen Ausleger 54 an der Statorplatte 15 gehaltert ist (Fig. 8). Das Schwenkrad 51 ist im wesentlichen tellerförmig ausgebildet und weist an seinem radial äusseren Rand entgegen die freien Enden der Stäbe 22 gerichtete Zähne 55 auf, dessen Teilung mit der Teilung der Stäbe 22 gleich ist.

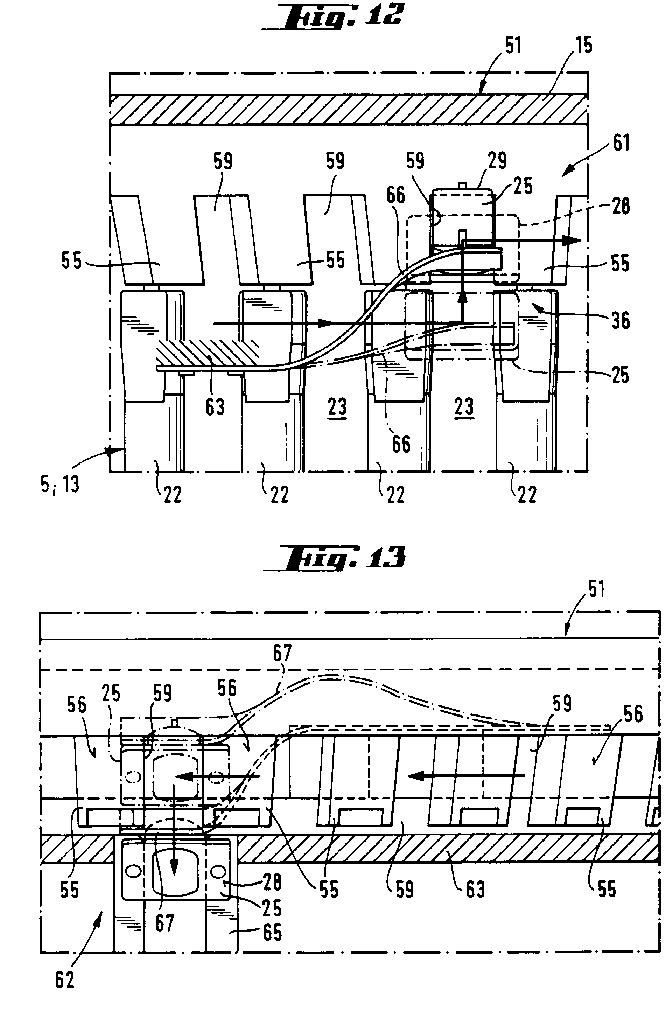

Die äussere Mantelkontur 56 der Zähne 55, sowie dessen Breite ist derart gestaltet, dass sie eine Verlängerung der durch die Stäbe 22 gebildete Küvettenführung im Uebergabebereich (Fenster 36) darstellt.
Die Zähne 55 sind mit stirnseitig und radial aussen offenen Ausnehmungen 57 versehen, in welche von den freien Enden der Stäbe 22 abragende Stifte 58 nach art eines Zahnradgetriebes eingreifen können.
Das Schwenkrad 51 ist somit mit dem Rotor 13 drehgekoppelt, derart, dass die Zwischenräume 23 im Uebergabebereich (36) mit den Zwischenräumen 59 zweier benachbarter Zähne 55 des Schwenkrades 51 fluchten.
Die freien Stirnseiten der Verzahnung 55 sind bis auf die Einschleus- bzw. Ausschleusstelle 61, 62 durch eine feststehende Platte 63 abgedeckt, wodurch die im Schwenkrad 51 befindlichen Küvetten 25 gegen axiales Herausfallen gesichert sind. Die Platte 63 ist topfartig um den äusseren Umfangsrand des Schwenkrades 51 herumgeführt, wodurch die Küvetten 25 sich an der inneren Umfangswand 64 abstützen können und gegen radiales Herausfallen gesichert sind (Fig. 11).

Eine Einschleusfeder 66 schiebt die von der Ausricht- und Separiereinrichtung 5 in den Uebergabebereich (36) transportierten Küvetten 25 in den unteren Bereich des Schwenkrades 51, in den Zwischenraum 59 zweier benachbarter Zähne 55 hinein (Fig. 12).

In einer oberen Position des Schwenkrades 51 werden die Küvetten 25 mittels einer Ausschleusfeder 67 ausgeschleust und in ein Küvettenlager 65 geschoben (Fig. 13).
Von dort werden die Küvetten 25 zu ihrem Bestimmungsort in der Analysenvorrichtung weitertransportiert.

## Patentansprüche

1. Vorrichtung zur Vereinzelung von Küvetten, die einem Analysengerät in Form von Schüttgut zugeführt werden, wobei die Küvetten zur Durchführung photometrischer Messungen der in den Küvetten enthaltenen Proben geeignet sind, und wobei jede Küvette einen rohrförmigen Körper mit einem Flanschansatz hat, der sich nach aussen erstreckt, und der senkrecht zu der Küvettenwand gerichtet ist, welche Vorrichtung folgende Komponenten enthält:
a) eine Aufnahmestelle (1) zur Aufnahme der Küvetten (25) in Form von Schüttgut,
b) eine Einrichtung (5) zur Vereinzelung von Küvetten, welche Einrichtung einen Eingang (24) hat, durch den ungeordnete Küvetten der Einrichtung (5) zugeführt werden, und einen Ausgang (36) hat, durch den einzelne Küvetten hintereinander die Einrichtung verlassen, und
c) Mittel (2) zum Transport ungeordneter Küvetten (25) von der Aufnahmestelle (1) zum Eingang (24) der Einrichtung (5) zur Vereinzelung der Küvetten,
welche Vorrichtung dadurch gekennzeichnet ist, dass sie zur vereinzelung von Küvetten geignet ist, welche aus einem aus Lichtdurchlässigem kunstoff, in einem Stück geformten Teil bestehen, zwei planparallele Wände besitzen, und wobei die Flanschansätze beider planparallelen Wände in bezug auf die Längsachse der Küvette zueinander symmetrisch sind, und wobei die Einrichtung (5) zur Vereinzelung ungeordneter Küvetten (25) folgende Komponenten enthält:
d) eine feste Platte (15), die auf einer Grundplatte (14) montiert und in bezug auf eine senkrechte Gerade geneigt angeordnet ist,
e) ein Lagerrohr (18), das auf der festen Platte (15) montiert und senkrecht dazu gerichtet ist,
f) eine drehbare Scheibe (19), die auf dem Lagerrohr (18) drehbar gelagert ist und parallel zur festen Platte (15) angeordnet ist,
g) eine auf der drehbaren Scheibe (19) befestigte, zylindrische Anordnung von gleich grossen, zylindrischen Stäben (22), die voneinander gleichmässig beabstandet entlang eines Kreises angeordnet sind, der mit dem Lagerrohr (18) konzentrisch ist, wobei die Stäbe (22) parallel zum Lagerrohr (18) gerichtet und wie er in bezug auf eine horizontale Gerade um einen Winkel (α) geneigt sind, und wobei ein Ende jedes der Stäbe (22) mit der drehbaren Scheibe (19) fest verbunden ist, während das andere Ende des Stabes frei ist und durch einen Spalt von der Festplatte beabstandet ist, und wobei der Abstand zwischen benachbarten Stäben (22) gerade so gross ist, dass der Körper einer Küvette zwischen den Stäben (22) einfahren kann, wenn die planparallelen Wände der Küvette sich parallel zur Längsachse der Stäbe (22) befinden,
h) motorgetriebene Mittel (26, 27) zur Drehung der drehbaren Scheibe (19) mit konstanter Geschwindigkeit,
i) eine feste, ringförmige Scheibe (33), die auf der festen Platte (15) montiert ist, in deren Mitte einen Durchgang für das Lagerrohr (18) aufweist, und deren Umfangsrand sich innerhalb der zylindrischen Anordnung von Stäben (22) befindet, wobei der Abstand zwischen dem Rand der festen, ringförmigen Scheibe (33) und den Stäben (22) knapp etwas grösser als die Dicke der Flanschansätze der Küvetten (25) ist, und
j) eine erste in der festen Platte (15) vorhandene Oeffnung (24), die sich oberhalb des unteren Rands der festen ringförmigen Scheibe (33) befindet und die als Eingang zur Einführung ungeordneter Küvetten (25) in die käfigartige Struktur dient, die durch die feste Platte (15), die Anordnung von Stäben (22) und die drehbare Scheibe (19) gebildet ist.

2. Vorrichtung gemäss Anspruch 1, dadurch gekennzeichnet, dass die Einrichtung (5) zur Vereinzelung ungeordneter Küvetten (25) ferner folgende Komponenten enthält:
k) eine zweite in der festen Platte (15) vorhandene Oeffnung (36), die sich am unteren Rand der festen ringförmigen Scheibe (33) befindet und die als Ausgang zur Ausgabe einzelner Küvetten (25) dient, deren Flanschansätze bei der Drehung der käfigartigen Struktur zwischen dem Umfangsrand der festen, ringförmigen Scheibe (33) und der Anordnung von Stäben (22) zum liegen kommen, und
l) Mittel (43) zum Ausschleusen einzelner Küvetten (25) durch die zweite Oeffnung in der festen Platte (15), wenn die Küvetten sich während der Drehung der käfigartigen Struktur unmittelbar vor der zweiten Oeffnung befinden.

3. Vorrichtung gemäss Anspruch 1, dadurch gekennzeichnet, dass die Einrichtung (5) zur Vereinzelung ungeordneter Küvetten (25) ferner folgende Komponenten enthält:
k) eine zweite in der festen Platte (15) vorhandene Oeffnung (36), die sich am oberen Rand der festen ringförmigen Scheibe (33) befindet und die als Ausgang zur Ausgabe einzelner Küvetten (25) dient, deren Flanschansätze bei der Drehung der käfigartigen Struktur zwischen dem Umfangsrand der festen, ringförmigen Scheibe (33) und der Anordnung von Stäben (22) zum liegen kommen, und
l) Mittel (43) zum Ausschleusen einzelner Küvetten (25) durch die zweite Oeffnung in der festen Platte (15), wenn die Küvetten sich während der Drehung der käfigartigen Struktur unmittelbar vor der zweiten Oeffnung befinden.

4. Vorrichtung gemäss Anspruch 2 oder 3, dadurch gekennzeichnet, dass der Neigungswinkel der Stäbe (22) in bezug auf eine horizontale Gerade (32) einen Bereich zwischen 10 und 20 Grad beträgt.

5. Vorrichtung gemäss Anspruch 2 oder 3, dadurch gekennzeichnet, dass der Neigungswinkel der Stäbe (22) in bezug auf eine horizontale Gerade (32) ca 15 Grad beträgt.

6. Vorrichtung gemäss Anspruch 2 oder 3, dadurch gekennzeichnet, dass die motorgetriebenen Mittel (26, 27) zur Drehung der drehbaren Scheibe (19) eine Drehgeschwindigkeit in einem Bereich zwischen 8 und 15 Umdrehungen pro Minute bewirken.

7. Vorrichtung gemäss Anspruch 2 oder 3, dadurch gekennzeichnet, dass die motorgetriebenen Mittel (26, 27) zur Drehung der drehbaren Scheibe (19) eine Drehgeschwindigkeit von ca. 11 Umdrehungen pro Minute bewirken.

## Claims

1. An apparatus for separating cuvettes supplied in bulk form to an analytical instrument, the cuvettes being suitable for the performance of photometric measurements on samples contained in the cuvettes, and each cuvette having a tubular body with a flange attachment which extends outwards and at right angles to the cuvette wall, which device contains the following components:
a) a receiving station (1) for the receipt of cuvettes (25) in bulk form,
b) a device (5) for separating the cuvettes, said device having an inlet (24) through which the disordered cuvettes are conducted into the device (5) and an outlet (36) through which the individual cuvettes successively leave the device, and
c) means (2) for conveying disordered cuvettes (25) from the receiving station (1) to the inlet (24) of the device (5) for separating the cuvettes,
which apparatus is characterized in that it is suitable for separating cuvettes which are made in one piece from light-transmitting plastic, have two plane-parallel walls and in which the flange attachments of the two plane-parallel walls are symmetrical with one another relative to the longitudinal axis of the cuvette, and wherein the device (5) for separating disordered cuvettes (25) contains the following components:
d) a fixed plate (15) mounted on a base plate (14) and disposed at an angle to a vertical line,
e) a bearing rod (18) mounted on the fixed plate (15) and disposed at right angles thereto,
f) a rotatable disc (19) rotatably mounted on the bearing rod (18) and disposed parallel to the fixed plate (15),
g) a cylindrical arrangement of equal-sized cylindrical rods (22) secured to the rotatable disc (19), the rods being equally spaced apart around a circle concentric with the bearing rod (18), the rods (22) being aligned parallel to the bearing rod (18) and, like the bearing rod, inclined at an angle (α) to a horizontal line, and one end of each rod (22) being permanently connected to the rotatable disc (19) whereas the other end of the rod is free and is separated from the fixed plate by a gap, and the distance between adjacent rods (22) is just sufficient for the body of a cuvette to enter between the rods (22) when the plane-parallel walls of the cuvette are parallel to the longitudinal axis of the rods (22),
h) motor-driven means (26, 27) for rotating the rotatable disc (19) at a constant speed,
i) a fixed annular disc (33) mounted on the fixed plate (15) and having a central aperture for the bearing rod (18), the peripheral edge of the disc being inside the cylindrical arrangement of rods (22), and the distance between the edge of the fixed annular disc (33) and the rods (22) being slightly greater than the thickness of the flange attachments on the cuvettes (25), and
j) a first opening (24) in the fixed plate (15), arranged above the bottom edge of the fixed annular disc (33), the opening serving as an inlet for inserting disordered cuvettes (25) into the cage-like structure formed by the fixed plate (15), the arrangement of rods (22) and the rotatable disc (19).

2. An apparatus according to claim 1, characterized in that the device (5) for separating disordered cuvettes (25) contains the following additional components:
k) a second opening (36) in the fixed plate (15), arranged at the bottom edge of the fixed annular disc (33), the opening serving as an outlet for discharging individual cuvettes (25) when their flange attachments come to rest between the peripheral edge of the fixed annular disc (33) and the arrangement of rods (22) during rotation of the cage-like structure, and
I) means (43) for delivering individual cuvettes (25) through the second opening in the fixed plate (15) when the cuvettes are immediately in front of the second opening during rotation of the cage-like structure.

3. An apparatus according to claim 1, characterized in that the device (5) for separating disordered cuvettes (25) contains the following additional components:
k) a second opening (36) in the fixed plate (36), arranged at the top edge of the fixed annular disc (33), the opening serving as an outlet for discharging individual cuvettes (25) when their flange attachments come to rest between the peripheral edge of the fixed annular disc (33) and the arrangement of rods (22) during rotation of the cage-like structure, and
I) means (43) for delivering individual cuvettes (25) through the second opening in the fixed plate (15) when the cuvettes are immediately in front of the second opening during rotation of the cage-like structure.

4. An apparatus according to claim 2 or 3, characterized in that the angle of inclination of the rods (22) relative to a horizontal line (32) is between 10 and 20 degrees.

5. An apparatus according to claim 2 or 3, characterized in that the angle of inclination of the rods (22) relative to a horizontal line (32) is about 15 degrees.

6. An apparatus according to claim 2 or 3, characterized in that the motor-driven means (26, 27) for rotating the rotatable disk (19) provides a speed in the range between 8 and 15 revolutions per minute.

7. An apparatus according to claim 2 or 3, characterized in that the motor-driven means (26, 27) for rotating the rotatable disc (19) producea speed of about 11 revolutions per minute.

## Revendications

1. Dispositif pour distribuer individuellement des cuvettes qui sont fournies à un appareil d'analyse sous la forme d'un produit en vrac, où les cuvettes sont propres à exécuter des mesures photométriques des échantillons contenus dans les cuvettes et où chaque cuvette a un corps de forme tubulaire doté d'un rebord à collerette qui s'étend vers l'extérieur et qui est perpendiculaire à la paroi de la cuvette, lequel dispositif comprend les éléments suivants :
a) un emplacement de réception (1) pour recevoir des cuvettes (25) sous la forme d'un produit en vrac,
b) un dispositif (5) pour distribuer individuellement des cuvettes, lequel dispositif est doté d'une entrée (24) à travers laquelle des cuvettes en vrac sont fournies au dispositif (5) et d'une sortie (36) à travers laquelle des cuvettes individuelles sortent du dispositif l'une derrière l'autre, et
c) un moyen (2) pour le transport des cuvettes (25) en vrac depuis l'emplacement de réception (1) jusqu'à l'entrée (24) du dispositif (5) pour la distribution individuelle des cuvettes,
lequel dispositif est caractérisé en ce qu'il est propre à distribuer individuellement des cuvettes qui sont fabriquées dans une matière plastique transparente, se composant d'une seule pièce de forme et ayant deux parois à faces parallèles, en ce que les rebords à collerette des deux parois à faces parallèles sont symétriques l'un de l'autre par rapport à l'axe longitudinal de la cuvette et où le dispositif (5) pour la distribution individuelle des cuvettes (25) en vrac comprend:
d) une plaque fixe (15) qui est montée sur un socle (14) et qui est inclinée par rapport à une ligne verticale,
e) un tube-support (18) qui est monté sur la plaque fixe (15) et qui est perpendiculaire à celle-ci,
f) un disque rotatif (19) qui est logé de façon pivotante sur le tube-support (18) et qui est parallèle à la plaque fixe (15),
g) un ensemble cylindrique, fixé sur le disque rotatif (19), de barres cylindriques (22) de mêmes dimensions, qui sont disposées en étant espacées les unes des autres avec un même intervalle, le long d'un cercle qui est concentrique avec le tube-support (18), où les barres (22) sont parallèles au tube-support (18) et, comme celui-ci, sont inclinées suivant un angle (α) par rapport à une ligne horizontale, et où une extrémité de chacune des barres (22) est solidement accouplée au disque rotatif (19), tandis que l'autre extrémité de la barre est libre et est séparée de la plaque fixe par un espace, et où l'intervalle entre des barres voisines (22) est d'une dimension telle que le corps d'une cuvette peut passer entre les barres (22) lorsque les parois à faces parallèles de la cuvette sont parallèles à l'axe longitudinal des barres (22),
h) des moyens (26, 27) entraînés par un moteur faisant tourner le disque rotatif (19) à vitesse constante,
i) un disque fixe (33) de forme annulaire qui est monté sur la plaque fixe (15), lequel disque présente en son milieu un passage pour le tube-support (18) et dont le bord circonférentiel se trouve à l'intérieur de l'ensemble cylindrique de barres (22), où l'intervalle entre le bord du disque fixe (33) de forme annulaire et les barres (22) est à peine supérieur à l'épaisseur des rebords à collerette des cuvettes (25), et
j) une première ouverture (24) pratiquée dans la plaque fixe (15), ladite ouverture se trouvant au-dessus du bord inférieur du disque fixe (33) de forme annulaire et servant d'entrée pour introduire les cuvettes (25) en vrac dans la structure en forme de cage qui est formée par la plaque fixe (15), par l'ensemble de barres (22) et par le disque rotatif (19).

2. Dispositif selon la revendication 1, caractérisé en ce que le dispositif (5) pour la distribution individuelle de cuvettes (25) en vrac comprend en outre les éléments suivants :
k) une seconde ouverture (36) pratiquée dans la plaque fixe (15), ladite ouverture se trouvant sur le bord inférieur du disque fixe (33) de forme annulaire et servant de sortie pour fournir les cuvettes (25) individuelles dont les rebords à collerette, lors de la rotation de la structure en forme de cage, viennent se placer entre le bord circonférentiel du disque fixe (33) de forme annulaire et l'ensemble de barres (22), et
l) des moyens (43) pour faire sortir les cuvettes individuelles (25) par la seconde ouverture pratiquée dans la plaque fixe (15) lorsque les cuvettes se trouvent directement devant la seconde ouverture pendant la rotation de la structure en forme de cage.

3. Dispositif selon la revendication 1, caractérisé en ce que le dispositif (5) pour la distribution individuelle de cuvettes (25) en vrac comprend en outre les éléments suivants :
k) une seconde ouverture (36) pratiquée dans la plaque fixe (15), ladite ouverture se trouvant sur le bord supérieur du disque fixe (33) de forme annulaire et servant de sortie pour fournir les cuvettes (25) individuelles dont les rebords à collerette, lors de la rotation de la structure en forme de cage, viennent se placer entre le bord circonférentiel du disque fixe (33) de forme annulaire et l'ensemble de barres (22), et
l) des moyens (43) pour faire sortir les cuvettes individuelles (25) par la seconde ouverture pratiquée dans la plaque fixe (15) lorsque les cuvettes se trouvent directement devant la seconde ouverture pendant la rotation de la structure en forme de cage.

4. Dispositif selon la revendication 2 ou 3, caractérisé en ce que l'angle d'inclinaison des barres (22), par rapport à une ligne horizontale (32), est égal à une plage comprise entre 10 et 20 degrés.

5. Dispositif selon la revendication 2 ou 3, caractérisé en ce que l'angle d'inclinaison des barres (22), par rapport à une ligne horizontale (32), est égal à 15 degrés environ.

6. Dispositif selon la revendication 2 ou 3, caractérisé en ce que les moyens (26, 27) entraînés par un moteur pour faire tourner le disque rotatif (19) ont une vitesse de rotation comprise entre 8 et 15 tours par minute.

7. Dispositif selon la revendication 2 ou 3, caractérisé en ce que les moyens (26, 27) entraînés par un moteur pour faire tourner le disque rotatif (19) ont une vitesse de rotation d'environ 11 tours par minute.
